# EUROPEAN PATENT APPLICATION

(11) **EP 3 415 745 A1**
(43) Date of publication of application: **19.12.2018**
(21) Application number: 17775243.3
(22) Date of filing: 29.03.2017
(51) Int. Cl.: F02D 13/02, F02B 29/08

(54) **ENGINE CONTROL DEVICE**

(30) Priority: 31.03.2016 JP 2016070645
(71) Applicant: Mazda Motor Corporation, Aki-gun Hiroshima 730-8670 (JP)
(72) Inventor: YOUSO, Takashi, Aki-gun Hiroshima 730-8670 (JP); NAGANO, Takaaki, Aki-gun Hiroshima 730-8670 (JP)
(74) Representative: Behr, Wolfgang
(86) International application number: PCT/JP2017/012931
(87) International publication number: WO 2017/170709

(57) **Abstract**

Disclosed is a control device for an engine provided with a first intake valve and a second intake valve in an intake port. The control device comprises: a variable valve operating mechanism 72 configured to control a valve opening timing and a valve closing timing of an intake valve 21a; and a variable valve operating mechanism 72 configured to control a valve opening timing and a valve closing timing of an intake valve 21b, independently of the intake valve 21a. The latter variable valve mechanisms 72 is operable, in an intake stroke of the engine, to close the intake valve 21b after the elapse of a delay time rt since the intake valve 21a is closed. The delay time rt is a time period during which a pressure wave generated upon closing of the intake valve 21a reaches the intake valve 21b through the intake port 16.

## Description

### TECHNICAL FIELD

The present invention relates to an engine control device, and more particularly to an engine control device configured to control opening and closing of an intake valve by a variable valve operating mechanism.

### BACKGROUND ART

In the technical field of engine control devices, there has heretofore been known a technic of adequately controlling valve opening and closing timings of each of an intake valve and an exhaust valve of an engine to thereby enhance engine operation efficiency (e.g., Patent Document 1).

### CITATION LIST

### [Patent Document]

Patent Document 1: JP 2012-36798A

The Patent Document 1 discloses an engine in which two intake valves and two exhaust valves configured to be opened and closed along the same lift curve are provided per cylinder, wherein a phase difference is set between valve opening timings of the intake valves or the exhaust valves to produce a swirl flow in a cylinder, thereby improving exhaust emissions and fuel economy.

### SUMMARY OF INVENTION

### [Technical Problem]

Meanwhile, in recent years, with a view to achieving further improvement in exhaust emissions and fuel economy, there has been a need to introduce a larger amount of fresh air to be introduced into each cylinder when an engine is operated in a lean combustion mode, or it is desired to obtain a high power output by fully opening a throttle valve for adjusting the amount of fresh air to be introduced into an engine.

In this regard, as a way to increase the amount of fresh air to be introduced into each cylinder, a technique of providing a compressor in an intake system of an engine by apply a turbocharger or the like to the engine system has been often employed.

It is an object of the present invention to provide an engine control device capable of increasing the amount of fresh air to be supplied to an engine by utilizing a means different from a compressor or the like provided in an intake system to compress fresh air, thereby increasing an engine power output.

### [Solution to Technical Problem]

In order to achieve the above object, the present invention provides a control device for an engine, wherein the engine comprises: a combustion chamber; a first intake opening and a second intake opening each communicated with the combustion chamber; a first intake valve and a second intake valve provided, respectively, to the first intake opening and the second intake opening; and an intake port connected to the first intake opening and the second opening. The control device comprises: a first valve operating mechanism configured to control a valve opening timing and a valve closing timing of the first intake valve; and a second valve operating mechanism configured to control a valve opening timing and a valve closing timing of the second intake valve, independently from the first intake valve, wherein the second valve operating mechanism is operable, in an intake stroke of the engine, to close the second intake valve after an elapse of a given delay time since the first intake valve is closed by the first valve operating mechanism, and wherein the delay time is a time period during which a pressure wave generated upon closing of the first intake valve reaches the second intake valve through the intake port.

In the control device of the present invention, it is possible to close, in an intake stroke, the second intake valve after the elapse of a given delay time since the closing of the first intake valve. Here, the delay time is a time period during which a pressure wave generated when the first intake valve is closed reaches the second intake valve through the intake port. Thus, by closing the second intake valve at this timing, it becomes possible to increase a pressure around the second intake valve by utilizing a pressure wave generated upon closing of the first intake valve, thereby increasing the amount of fresh air to be introduced from the second intake valve into a cylinder.

Preferably, in the control device of the present invention, the delay time is set based on engine speed, such that it becomes longer as the engine speed becomes higher.

According to this feature, it becomes possible to adequately set the delay time according to the engine speed.

Preferably, in the control device of the present invention, the intake port is branched into two parts at a branch point located upstream of the first and second intake openings, and the branched parts are connected, respectively, to the first and second intake openings, wherein the delay time is set based on a distance from the first intake opening to the second intake opening via the branch point.

### [Effect of Invention]

As above, the engine control device of the present invention can increase the amount of fresh air to be supplied to an engine, without providing, in an intake system, a compressor or the like for compressing fresh air.

### BRIEF DESCRIPTION OF DRAWINGS

FIG. 1 is a schematic diagram of an engine system according to one embodiment of the present invention.
FIG. 2 is a schematic configuration diagram of an engine in the engine system according to this embodiment.
FIG. 3 is a schematic configuration diagram of a variable valve operating mechanism in the engine system according to this embodiment.
FIG. 4 is a graph depicting the operation of the variable valve operating mechanism in the engine system according to this embodiment.
FIG. 5 is a control block diagram of the engine system according to this embodiment.
FIG. 6 is a graph depicting the movement of an intake valve, in the engine system according to this embodiment.
FIG. 7 is a graph depicting a relationship between engine speed and delay time, in the engine system according to this embodiment.

### DESCRIPTION OF EMBODIMENTS

With reference to the accompanying drawings, an engine system according to one embodiment of the present invention will now be described.

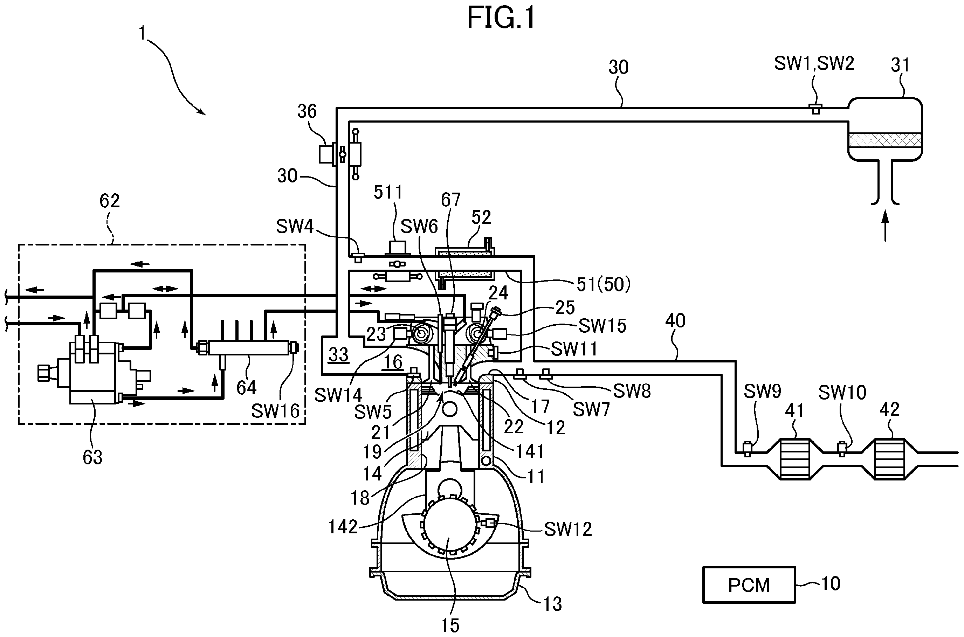

First of all, with reference to FIG. 1, the configuration of the engine system according to this embodiment will be described. FIG. 1 is a schematic diagram of the engine system according to this embodiment.

As depicted in FIG. 1, an engine 1 is a gasoline engine which is mounted to a vehicle, and configured to be supplied with fuel containing at least gasoline. The engine 1 comprises: a cylinder block 11 provided with a plurality of cylinders 18 (although FIG. 1 depicts only one cylinder, the cylinder block 11 is actually provided with a plurality of, e.g., four, cylinders, in an in-line arrangement); a cylinder head 12 disposed on the top of the cylinder block 11; and an oil pan 13 disposed under the cylinder block 11 and storing lubricant therein. Each of the cylinders 18 is provided with a piston 14 which is connected to a crankshaft 15 via a connecting rod 142, and fittingly inserted in the cylinder 18 in a reciprocatingly movable manner. The piston 14 has a top surface provided with a cavity 141 forming a re-entrant type combustion chamber usable as a combustion chamber of a diesel engine. The cavity 141 is configured to be opposed to an aftermentioned injector 67 when the piston 14 is located around a top dead center position on a compression stroke. The cylinder head 12, the cylinder 18, and the piston 14 having the cavity 141 define a combustion chamber 19. Here, it is to be noted that the shape of the combustion chamber 19 is not limited to the depicted shape. For example, the shape of the cavity 141, the shape of the top surface of the piston 14, the shape of a ceiling surface of the combustion chamber 19 and the like may be appropriately changed.

With a view to improvement in theoretical thermal efficiency, stabilization of compression ignition combustion, and others, the engine 1 is configured to have a relatively high geometrical compression ratio of 15 or more. Here, it is to be noted that the geometrical compression ratio may be appropriately set in the range of about 15 to 20.

With respect to each of the cylinders 18, the cylinder head 12 is formed with an intake port 16 and an exhaust port 17. The intake port 16 and the exhaust port 17 are provided, respectively, with an intake valve 21 and an exhaust valve 22 for opening and closing respective openings of the intake and exhaust ports on the side of the combustion chamber 19.

With respect to each of the cylinders 18, the cylinder head 12 is provided with an injector 67 for injecting fuel directly into the cylinder18 (direct-injection injector). The injector 67 is disposed such that a nozzle hole thereof faces the inside of the combustion chamber 19, from a central region of the ceiling surface of the combustion chamber 19. The injector 67 is operable to inject fuel directly into the combustion chamber 19, at an injection timing set according to an operating state of the engine 1 and in an amount according to the operating state of the engine 1. In this example, the injector 67 is a multi-hole injector having a plurality of nozzle holes, although its detailed depiction will be omitted. Thus, the injector 67 is operable to inject fuel such that fuel mist spreads in a radial pattern from a central position of the combustion chamber 19. Fuel mist injected so as to spread in a radial pattern from the central position of the combustion chamber 19, at a timing when the piston 14 is located around a top dead center position on a compression stroke, flows along a wall surface of the cavity 141 formed in the top surface of the piston. In other words, the cavity 141 is formed such that it can receive therein fuel mist injected at a timing when the piston 14 is located around a top dead center position on a compression stroke. A combination of this multi-hole injector 67 and the cavity 141 is advantageous in shortening an air-fuel mixture formation period after injection of fuel, and shortening a combustion period. Here, it is to be noted that the injector 67 is not limited to the multi-hole injector, but may be an outwardly lifting valve injector.

A non-depicted fuel tank and the injector 67 are coupled together by the fuel supply line extending therebetween. In the fuel supply line, a fuel supply system 62 is inserted which comprises a fuel pump 63 and a common rail 64 and is capable of supplying fuel to the injector 67 at a relatively high fuel pressure. The fuel pump 63 is capable of pumping fuel from the fuel tank to the common rail 64, and the common rail 64 is capable of storing the pumped fuel at a relatively high fuel pressure. In response to opening of the injector 67, fuel stored in the common rail 64 is injected from the nozzle holes of the injector 67. Here, the fuel pump 63 is a plunger pump, which is configured to be driven by the engine 1, although depiction is omitted. The fuel supply system 62 comprising the engine-driven pump enables fuel having a high fuel pressure of 30 MPa or more to be supplied to the injector 67. The fuel pressure may be set to about 120 MPa at a maximum. The pressure of fuel to be supplied to the injector 67 is changed according to the operating state of the engine 1. Here, it is to be noted that the fuel supply system 62 is not limited to this configuration.

The cylinder head 12 is further provided with a spark plug 25 for forcibly igniting (specifically, spark-igniting) an air-fuel mixture in the combustion chamber 19. In this example, the spark plug 25 is disposed to penetrate through the cylinder head 12 while extending obliquely downwardly from an exhaust side of the engine 1. Further, the spark plug 25 is disposed such that a distal end thereof faces the inside of the cavity 141 of the piston 14 when the piston 14 is located at a top dead center position on a compression stroke.

With respect to each of the cylinders 18, an intake passage 30 is connected to one of opposite lateral surfaces of the cylinder head 12 of the engine 1, in such a manner as to be communicated with the intake port 16. On the other hand, an exhaust passage 40 for discharging burned or combusted gas (exhaust gas) from the combustion chamber 19 is connected to the other lateral surface of the cylinder head 12 of the engine 1.

The intake passage 30 is provided with an air cleaner 31 for filtering intake air, at an upstream end thereof, and a throttle valve 36 for adjusting the amount of intake air to each of the cylinders 18, on a downstream side of the air cleaner 31. The intake passage 30 is further provided with a surge tank 33, at a position adjacent to a downstream end of the intake passage 30. A part of the intake passage 30 located downstream of the surge tank 33 is formed as a plurality of independent passages each branched with respect to a respective one of the cylinders 18. Each of the independent passages has a downstream end connected to a respective one of the intake ports16 in the cylinders 18.

An upstream part of the exhaust passage 40 is formed as an exhaust manifold which comprises: a plurality of independent passages each branched with respect to a respective one of the cylinders 18 and each connected to an outer end of a respective one of the exhaust ports 17; and a collector portion in which the independent passages are collected together. At positions downstream of the exhaust manifold, the exhaust passage 40 is provided with a direct catalyst 41 and an underfoot catalyst 42 each serving as an exhaust gas purification device for purifying harmful components contained in exhaust gas. Each of the direct catalyst 41 and the underfoot catalyst 42 comprises a tubular casing, and a catalyst, such as three-way catalyst, disposed in a flow path inside the casing.

A region of the intake passage 30 located between the surge tank 33 and the throttle valve 36 and a region of the exhaust passage 40 located upstream of the direct catalyst 41 are connected to each other via an EGR passage 50 for recirculating part of exhaust gas to the intake passage 30. The EGR passage 50 comprises a main passage 51 provided with an EGR cooler 52 for cooling exhaust gas by engine cooling water. The main passage 51 is further provided with an EGR valve 511 for adjusting a recirculation amount of exhaust gas to the intake passage 30.

The engine 1 is configured to be controlled by a powertrain control module (hereinafter referred to as "PCM") 10 as a control means. The PCM 10 is composed of a microprocessor comprising a CPU, a memory, a counter timer group, an interface, and paths connecting these units. This PCM 10 forms a controller.

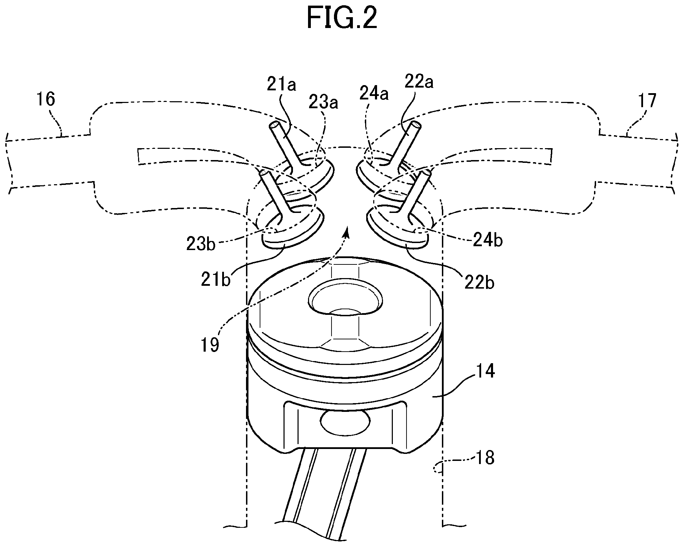

FIG. 2 is a schematic configuration diagram of the engine, specifically, a top perspective view of a specific one of the cylinders. As depicted in FIG. 2, in each of the cylinders 18, two intake openings (first and second intake openings) 23a, 23b and two exhaust openings 24a, 24b each communicated with the combustion chamber 19. The first and second intake openings 23a, 23b are configured to be opened and closed, respectively, by two intake valves 21a, 21b, and the exhaust openings 24a, 24b are configured to be opened and closed, respectively, by two exhaust valves 22a, 22b. The intake port 16 is branched into two parts at a position upstream of the first and second intake openings 23a, 23b, and the branched parts are connected, respectively, to the first and second intake openings 23a, 23b.

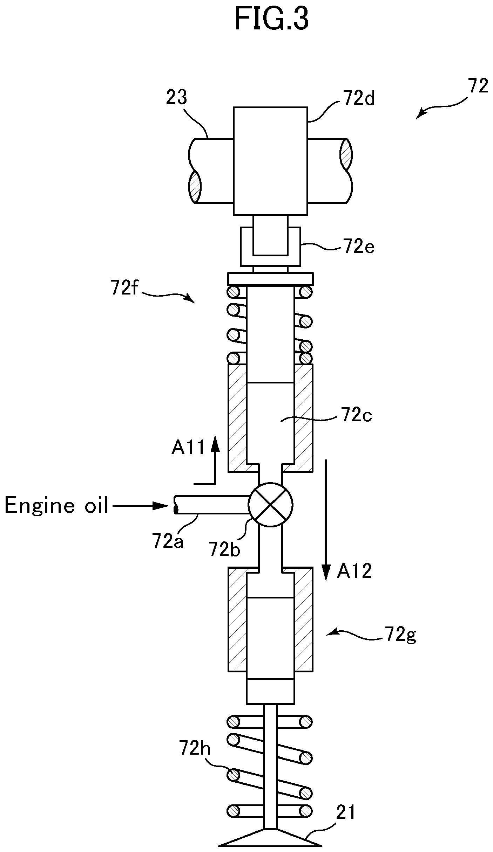

FIG. 3 is a schematic configuration diagram of a variable valve operating mechanism to be applied to each of the intake valves and the exhaust valves. Although the following detailed description will be made about an intake-side variable valve operating mechanism 72 to be applied to the intake valve 21, an exhaust-side variable valve operating mechanism 71 to be applied to the exhaust valve 22 has the same configuration.

As depicted in FIG. 3, the variable valve operating mechanism 72 to be applied to the intake valve 21 comprises: an oil supply passage 72a for allowing engine oil supplied from the outside to pass therethrough; a solenoid valve 72b provided on the oil supply passage 72a and configured as a three-way valve; and a pressure chamber 72c to be filled with engine oil supplied from the oil supply passage 72a via the solenoid valve 72b. The solenoid valve 72b is configured to be opened in a non-energized state, and closed in an energized state. Further, a non-depicted one-way valve or the like is provided on a part of the oil supply passage 72a located upstream of the solenoid valve 72b, thereby preventing the engine oil from flowing back through the oil supply passage 72a. In this variable valve operating mechanism 72, when the solenoid valve 72b is not energized, i.e., is in an open state, the oil supply passage 72a and the pressure chamber 72c are fluidically communicated with each other. Thus, engine oil from the oil supply passage 72a is supplied into the pressure chamber 72c (see the arrowed line A11 in FIG. 3).

The variable valve operating mechanism 72 further comprises: a cam 72d provided on an intake camshaft 23 to which rotation of the crankshaft 15 is transmitted via a timing belt or the like; a roller finger follower 72e configured to be swung by a force transmitted from the cam 72d; and a pumping unit 72f coupled to the pressure chamber 72c and configured to be moved by the roller finger follower 72e so as to raise the pressure (oil pressure) inside the pressure chamber 72c. In addition, the variable valve operating mechanism 72 comprises a braking unit 72g coupled to the pressure chamber 72c via the solenoid valve 72b and configured to be activated by the oil pressure inside the pressure chamber 72c, so as to open the intake valve 21, and a valve spring 72h giving a force for maintaining the intake valve 21 in its closed state when the braking unit 72g is not activated. In this variable valve operating mechanism 72, when the solenoid valve 72b is closed, the fluidic communication between the oil supply passage 72a and the pressure chamber 72c is shut off, and simultaneously the pressure chamber 72c and the braking unit 72g are fluidically communicated with each other, so that the oil pressure inside the pressure chamber 72c acts on the braking unit 72g (see the arrowed line A12 in FIG. 3).

The operation of the variable valve operating mechanism 72 for opening the intake valve 21 will be specifically described. When the cam 72d is rotated in synchronization with the intake camshaft 23, a cam nose (i.e., cam lobe) formed in the cam 72d is brought into contact with the roller finger follower 72e over a given time period. During the contact between the cam nose and the roller finger follower, the cam nose pushes the roller finger follower 72e toward the pumping unit 72f. When the roller finger follower 72e is pushed toward the pumping unit 72f, the roller finger follower 72e biases the pumping unit 72f, such that the pumping unit 72f compresses the engine oil inside the pressure chamber 72c. Thus, the oil pressure inside the pressure chamber 72c is raised. Then, upon closing of the solenoid valve 72b during the increase in oil pressure inside the pressure chamber 72c, the raised oil pressure inside the pressure chamber 72c acts on the braking unit 72g. Thus, the braking unit 72g biases the intake valve 21, so that the intake valve 21 is lifted and opened.

Basically, the intake valve 21 can be opened by closing the solenoid valve 72b at a certain timing in a period during which a leading-side edge face of the cam nose formed in the cam 72d acts on the roller finger follower 72e. Therefore, the variable valve operating mechanism 72 can change a valve opening timing of the intake valve 21 by changing a timing at which the solenoid valve 72b is switched from the open state to the closed state. Further, the variable valve operating mechanism 72 can change a valve closing timing of the intake valve 21 by changing a timing at which the solenoid valve 72b is switched from the closed state to the open state. In this embodiment, the cam nose is formed in a given position on the cam 72d so as to open the intake valve 21 in an intake stroke.

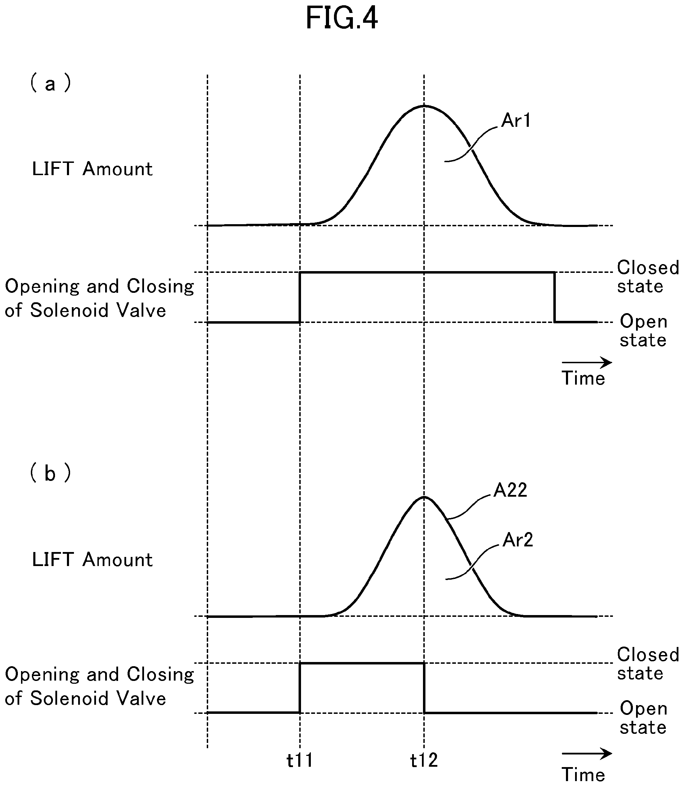

A chart (a) and a chart (b) of FIG. 4 are graphs depicting the operation of the variable valve operating mechanism 72. The chart (a) of FIG. 4 depicts, on the upper side thereof, the movement (lift curve) of the intake valve 21 in a case where the intake valve 21 is opened at a relatively early timing t11 by the variable valve operating mechanism 72, and further depicts, on the lower side thereof, open and closed states of the solenoid valve 72b of the variable valve operating mechanism 72 in the case where the intake valve 21 is moved as above. That is, the chart (a) of FIG. 4 depicts the movement of the intake valve 21 in a case where the solenoid valve 72b is closed over the entire period during which the cam nose acts on the roller finger follower 72e. On the other hand, the chart (b) of FIG. 4 depicts the movement of the intake valve 21 in a case where the solenoid valve 72b is closed when the cam nose starts to act on the roller finger follower 72e, and then opened at time t12 when an apex of the cam nose passes through the roller finger follower 72e.

Comparing the chart (a) of FIG.4 to the chart (b) of FIG.4, when the solenoid valve 72b is opened at the time t12 as depicted in the chart (b) of FIG.4, the intake valve 21 is rapidly lowered just after the time t12, so that it becomes possible to close the intake valve 21 at an earlier timing than that in the case depicted in the chart (a) of FIG.4. Specifically, upon opening of the solenoid valve 72b at the time t12, the pressure inside the pressure chamber 72c is lowered and thereby the oil pressure acting on the braking unit 72g is lowered, so that the intake valve 21 is closed. In this way, the valve closing timing of the intake valve 21 can be controlled by controlling a timing at which the solenoid valve 72b is opened.

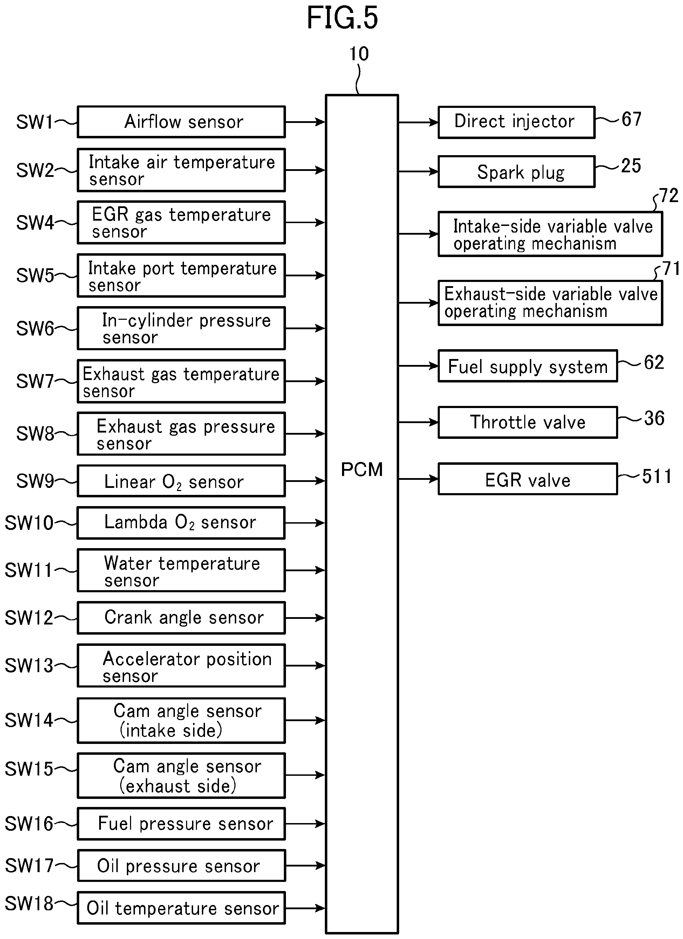

FIG. 5 is a control block diagram of the engine system according to this embodiment. As depicted in FIG. 5, the PCM 10 is configured to accept an input of detection signals of various sensors SW1, SW2, SW4 to SW18. Specifically, the PCM 10 is configured to accept an input of: a detection signal of an airflow sensor SW1 disposed downstream of the air cleaner 31 and operable to detect the flow rate of fresh air; a detection signal of an intake air temperature sensor SW2 disposed downstream of the air cleaner 31 and operable to detect the temperature of fresh air; a detection signal of an EGR gas temperature sensor SW4 disposed in the EGR passage 50 at a position adjacent to the connection with the intake passage 30 and operable to detect the temperature of external EGR gas; a detection signal of an intake port temperature sensor SW5 installed to each of the intake ports 16 and operable to detect the temperature of intake air just before flowing into each of the cylinders 18; a detection signal of an in-cylinder pressure sensor SW6 installed to the cylinder head 12 and operable to detect an internal pressure (in-cylinder pressure) of the cylinder 18; detection signals of an exhaust gas temperature sensor SW7 and an exhaust gas pressure sensor SW8 each disposed in the exhaust passage 40 at a position adjacent to the connection with the EGR passage 50 and operable to detect the temperature and pressure of exhaust gas, respectively; a detection signal of a linear O₂ sensor SW9 disposed upstream of the direct catalyst 41 and operable to detect the concentration of oxygen contained in exhaust gas; a detection signal of a lambda O₂ sensor SW10 disposed between the direct catalyst 41 and the underfoot catalyst 42 and operable to detect the concentration of oxygen in exhaust gas; a detection signal of a water temperature sensor SW11 operable to detect the temperature of engine cooling water; a detection signal of a crank angle sensor SW12 operable to detect a rotational angle of the crankshaft 15; a detection signal of an accelerator position sensor SW13 operable to detect an accelerator position corresponding to the amount of manipulation of an accelerator pedal depiction is omitted) of a vehicle; detection signals of intake-side and exhaust-side cam angle sensors SW14, SW15; a detection signal of a fuel pressure sensor SW16 installed to the common rail 64 of the fuel supply system 62 and operable to detect the pressure of fuel to be supplied to the injector 67; a detection signal of an oil pressure sensor SW17 operable to detect the pressure of engine oil in the engine 1; and a detection signal of an oil temperature sensor SW18 operable to detect the temperature of the engine oil.

The PCM 10 is operable to perform various calculations based on the above detection signals to thereby determine states of the engine 1 and the vehicle, and output control signals, respectively, to actuators of the (direct) injector 67, the spark plug 25, the intake-side variable valve operating mechanism 72 configured to control the intake valves 21a, 21b, the exhaust-side variable valve operating mechanism 71 configured to control the exhaust valves 22a, the fuel control system 62, and various valves (the throttle valve 36, the EGR valve 511, etc.). In this way, the PCM 10 controls the operation of the engine 1.

Next, functions of the engine system according to this embodiment will be described in detail.

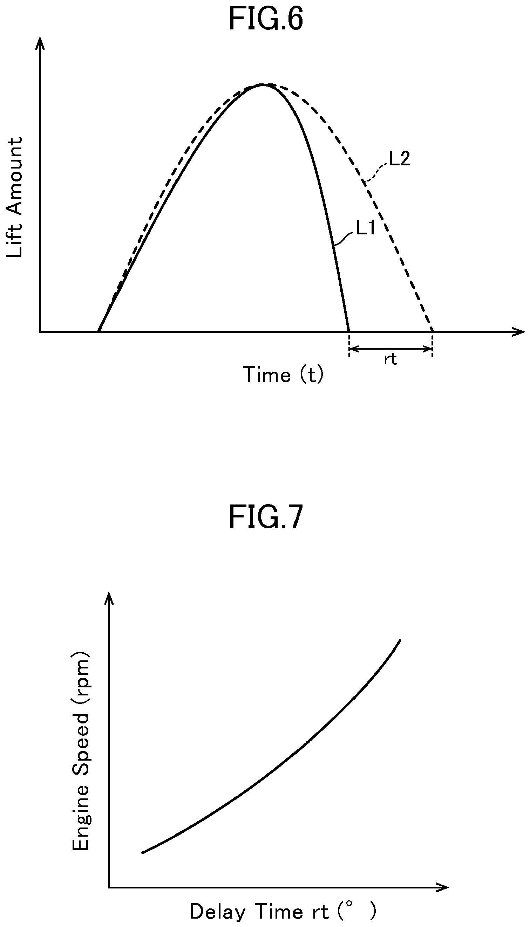

FIG. 6 is a graph depicting the movement of the intake valve in an intake stroke. In FIG. 6, the solid line L1 and the broken line L2 indicate, respectively, a lift curve of the intake valve 21a, and a lift curve of the intake valve 21b. As depicted in FIG. 6, in the variable valve operating mechanism 72 configured to control the first intake valve 21b, the solenoid valve 72b is continuously closed over a period during which the cam nose acts on the roller finger follower 72e in an intake stroke. Thus, a lift curve conforming to the profile of the cam nose is drawn. On the other hand, in the variable valve operating mechanism 72 configured to control the intake valve 21a, the intake valve 21a is opened simultaneously with the opening of the intake valve 21b, and then the solenoid valve 72b is opened at a given timing after the apex of the cam nose passes through the roller finger follower 72e. Thus, the intake valve 21a is closed earlier than the intake valve 21b, i.e., there is a given delay time rt between valve closing timings of the two intake valves. The PCM is configured to control the delay time rt according to engine speed. The delay time rt will be more specifically described below.

The delay time rt is equivalent to a time period during which a pressure wave generated upon closing of the intake valve 21a reaches the intake valve 21b through the intake port 16. Specifically, when the intake valve 21a is closed, a pressure wave moving backwardly through the intake port 16 is generated immediately after the intake valve 21a is closed. This pressure wave is propagated from the intake valve 21a toward the branch point of the intake port 16. Then, the pressure wave is propagated while being divided, at the branch point of the intake port 16, into two directions: one direction along which it further moves backwardly through the intake port; and the other direction along which it moves toward the second intake valve 21b. Then, in this embodiment, the intake valve 21b is closed when a pressure in the vicinity of the second intake opening 23b is raised by the pressure wave propagated, i.e., at a timing when the pressure wave reaches the intake valve 21b. This makes it possible to increase the amount of fresh air to be introduced from the second intake opening 23b into the combustion chamber 19, as compared to a case where the valve closing timing of the intake valve 21b is set without considering the reaching of the pressure wave.

Therefore, the delay time rt is determined by a distance from the first intake opening 23a to the second intake opening 23b via the branch point, a propagation velocity of the pressure wave (e.g., 350 m/s which is a sound velocity at normal atmospheric pressure), and engine speed. For example, in a case where a distance from the branch point to each of the first intake opening 23a and the second intake opening 23b is 100 mm, the distance from the first intake opening 23a to the second intake opening 23b is 200 mm. In this case, a time period necessary for the pressure wave to reach the second intake opening 23b from the first intake opening 23a is 0.57 (ms). Further, for example, in a case where the engine speed is 1000 (RPM), a value obtained by multiply a rotational angle per unit time by the reaching time is the delay time rt (°). Further, as the engine speed becomes higher, the rotational angle per unit time becomes larger, and therefore the delay time rt (°) becomes longer (the valve closing timing of the intake valve 21b is more delayed). Thus, as depicted in FIG. 7, the engine speed (RPM) and the delay time (rt) have an approximately proportional relationship, i.e., the delay time becomes longer as the engine speed becomes higher.

As above, in this embodiment, by closing the intake valve 21b in an intake stroke at a timing delayed according to the delay time rt, it becomes possible to increase a pressure around the intake valve 21b by utilizing a pressure wave generated upon closing of the intake valve 21a, thereby increasing the amount of fresh air to be introduced from the intake valve 21b into the combustion chamber 19.

### LIST OF REFERENCE SIGNS

1: engine
10: PCM
18: cylinder
21: intake valve
23a: first intake opening
23b: second intake opening
72: intake-side variable valve operating mechanism

## Claims

1. A control device for an engine, the engine comprising: a combustion chamber; a first intake opening and a second intake opening each communicated with the combustion chamber; a first intake valve and a second intake valve provided, respectively, to the first intake opening and the second intake opening; and an intake port connected to the first intake opening and the second opening, the control device comprising:
a first valve operating mechanism configured to control a valve opening timing and a valve closing timing of the first intake valve; and
a second valve operating mechanism configured to control a valve opening timing and a valve closing timing of the second intake valve, independently from the first intake valve,
wherein the second valve operating mechanism is operable, in an intake stroke of the engine, to close the second intake valve after an elapse of a given delay time since the first intake valve is closed by the first valve operating mechanism, and
wherein the delay time is a time period during which a pressure wave generated upon closing of the first intake valve reaches the second intake valve through the intake port.

2. The control device as recited in claim 1, wherein the delay time is set based on engine speed, such that the delay time becomes longer as the engine speed becomes higher.

3. The control device as recited in claim 1 or 2, wherein the intake port is branched into two parts at a branch point located upstream of the first and second intake openings, and the branched parts are connected, respectively, to the first and second intake openings, and wherein the delay time is set based on a distance from the first intake opening to the second intake opening via the branch point.
